# EUROPEAN PATENT APPLICATION

(11) **EP 0 836 313 A2**
(43) Date of publication of application: **15.04.1998**
(21) Application number: 97308054.2
(22) Date of filing: 10.10.1997
(51) Int. Cl.: H04M 3/54, H04Q 7/22

(54) **Mobile user terminal with call diversion facility**

(30) Priority: 11.10.1996 GB 9621209
(71) Applicant: ICO Services Ltd., London W6 9BN (GB)
(72) Inventor: Chambers, Paul, High Wycombe,Buckinghamshire, HP13 7LJ (GB)
(74) Representative: Read, Matthew Charles

(57) **Abstract**

In a telephone system a mobile radio telephone handset communicates via a satellite 3 and a satellite earth station 5 into a terrestrial system 7 which includes a call diversion centre 39. If radio contact is lost with the handset 1, the call diversion centre 39 can be telephoned using an alternative telephone 25 and the mobile radio telephone handset 1 used automatically to provide acoustic instructions to the telephone 25 and hence instruct the diversion centre 39, whereby calls, directed to the handset 1, are diverted to a selectable other telephone 25. Diversion can terminate as soon as the mobile radio telephone handset 1 once again reestablishes radio contact with the satellite 3 or can be conditional, only operating if the satellite earth station 5 fails to get a call through to the handset 1.

## Description

### Field of the invention

This invention relates to a mobile user terminal for use in a mobile communications network which includes a call diversion centre, that permits the user to remain contactable even when communications signals for the user terminal that are transmitted through the mobile network become blocked, for example because the user is inside a building. The invention has particular but not exclusive application to maintaining contactability in a satellite communications network.

### Background

Terrestrial mobile communications systems are well known and a number of different systems have been developed. These public land mobile networks (PLMNs) may operate according to analog or digital standards. In Europe, the Far East, excluding Japan and elsewhere, the digital Global System Mobile (GSM) network has become popular, whereas in USA, the Advanced Mobile Phone System (AMPS) and the Digital Advanced Mobile Phone System (DAMPS) are used. In Japan, the Personal Handiphone System (PHS) and the Personal Digital Communication (PDC) network are in use. More recently, proposals have been made for a Universal Mobile Telecommunications System (UMTS). These networks are all cellular and land-based.

Considering for example the GSM system, individual cells of the mobile network are served by a series of geographically spaced, terrestrial base transceiver stations (BTSs) which are coupled through base switching centres (BSCs) to a mobile switching centre (MSC) which may provide a gateway out of the network to a conventional public switched telephone network (PSTN). The network includes a home location register (HLR) which stores information about the subscribers to the system and their user terminals. Associated with the HLR is an authentication centre (AuC), the function of which is to authenticate the subscriber, who is identified by a unique number known as the international mobile subscriber identity (IMSI). When a user terminal is switched on, it registers with the HLR and an authentication procedure is carried out.

If the user terminal roams to a different GSM network, in a different geographical location, it registers with a visitor location register (VLR) of the visited network, which communicates with the HLR of the home network for billing and other purposes. DAMPS, PHS and PDC networks include similar base stations and location registers.

It is well known that PLMNs may include a call diversion centre that offers a number of user selectible call diversion options, so that if the user terminal cannot be contacted, for example in the event that the user terminal is turned off, an incoming call for the user terminal can be diverted to another number, such as a telephone number in a public switched network (PSTN).

Mobile telecommunication systems have been proposed that use satellite communication links between mobile user terminals and conventional terrestrial networks such as PSTNs and PLMNs. One network known as the IRIDIUM™ satellite cellular system is described in EP-A-0365885 and US Patent No. 5 394 561 (Motorola), which makes use of a constellation of so-called low earth orbit (LEO) satellites, that have an orbital radius of 780 km. Mobile user terminals such as telephone handsets establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed with an orbital radius in the range of 10-20,000 km and reference is directed to Walker J.G. "Satellite Patterns for Continuous Multiple Whole Earth Coverage" Royal Aircraft Establishment, pp 119-122 (1977). Reference is further directed to the ICO™ satellite cellular system described for example in GB-A-2 295 296, and to the ODYSSEY™ satellite cellular system described in EP-A- 0 510 789. With these systems, the satellite communication link does not permit communication between adjacent satellites and instead, a signal from a mobile user terminal such as a mobile handset is directed firstly to the satellite and then directed to a ground station or satellite access node (SAN), connected to a conventional land-based telephone network. This has the advantage that many components of the system are compatible with known digital terrestrial cellular technology such as GSM. Also, simpler satellite communication techniques can be used than with a LEO network.

In satellite communications networks, ground stations are located at different sites around the world in order to communicate with the orbiting satellites. In the ICO™ system and others, a VLR is associated with each of the satellite ground stations, which maintains a record of the individual user terminals that are making use of the particular ground station. Also a HLR is provided for the subscribers to the system.

In the case of terrestrial and especially satellite mobile networks, signal reception may be impaired by the presence of obstacles in the communication path. In particular, signal reception may be difficult or even impossible within enclosed structures such as buildings, preventing calls from being received or initiated. The difficulty in maintaining a connection depends largely on the power of the signal and on the location of the user within the building, and is thus a more significant problem in satellite networks for which the received power levels are generally less than those for terrestrial mobile networks. Also, with satellite systems, in built up areas, buildings can temporarily shield the line of sight for communications signals from the orbiting satellite, particularly for periods when the satellite appears low in the sky for the user terminal.

In WO 92/08311, a terrestrial mobile network is proposed that includes a call diversion facility which can divert calls for the mobile user through a PSTN. A mobile telephone handset can be placed in a specially designed telephone receiver unit connected in the PSTN. When located in the receiver unit, the mobile handset triggers the receiver unit to autodial the call diversion facility and divert calls for the mobile handset to the receiver unit, so that calls for the user can be routed though the PSTN rather than the mobile network. However, this system is inflexible because it requires specially designed receiver units connected to the PSTN and is only really suited for use at the office or at home or other locations where a mobile user regularly has access to the PSTN.

The present invention provides a more flexible solution, which does not require a specially designed PSTN receiver unit and is suitable for use with conventional telephone sets.

### Summary of the invention

According to the invention there is provided a mobile user terminal for use in a mobile telecommunications network which includes a call diversion centre responsive to a command from another telephone to divert calls for the user terminal, the mobile user terminal being selectively operable to generate acoustic signals to be coupled through the other telephone to control operation of the call diversion centre.

The mobile user terminal according to the invention may include an earpiece for use in normal mobile communication by the user, and a control circuit operative to feed electrical signals to the earpiece so as to produce the acoustic signals that are coupled through the other telephone to control call diversion. The mobile user terminal may comprise a handset with a telephone keypad, with control circuit being responsive to a predetermined operation of the keypad to produce the acoustic signals. The acoustic signals may comprise dial tone multiple frequency (DTMF) signals.

The invention also includes a method of diverting a call from a telecommunications network that includes a call diversion centre, to a mobile user terminal, the method comprising calling the diversion centre from another telephone, using the mobile user terminal to generate acoustic signals, and feeding the acoustic signals to the other telephone whereby to produce corresponding telecommunication signals to be directed to the diversion centre to cause diversion of calls for the mobile user terminal.

The telephone number of the telephone to which the calls are to be diverted, may be loaded into the mobile terminal, so that the number is included in the signals transmitted to the call diversion centre through the other telephone. The telephone number may conveniently be the number of the other telephone, so that for example, when the user is in a building in which the other telephone is located, and loses contact with the mobile network, calls can be routed to the other telephone in the building so as to remain in contact. However, the calls for the user terminal can be diverted to a different number if desired.

Radio contact with the mobile user terminal may be monitored and the diversion of calls may be ceased automatically when the radio contact is regained after having previously been lost. Also, the user terminal may be configured to send acoustic signals via the other or another telephone to cease the diversion.

### Brief description of the drawings

The invention is further explained, by way of example, by the following description, read in conjunction with the appended drawings, in which:
Figure 1 is a diagram of an overall system which encompasses an embodiment of the present invention,
Figure 2 is illustrative of the circumstances in which access may be lost, to the satellite of Figure 1, by the mobile user terminal,
Figure 3 is a flow chart of the behaviour of the mobile user terminal when in call diversion mode,
Figure 4 is a schematic diagram of the mobile user terminal, and
Figure 5 is a schematic block diagram of the circuits of the user terminal shown in Figure 4.

### Detailed description

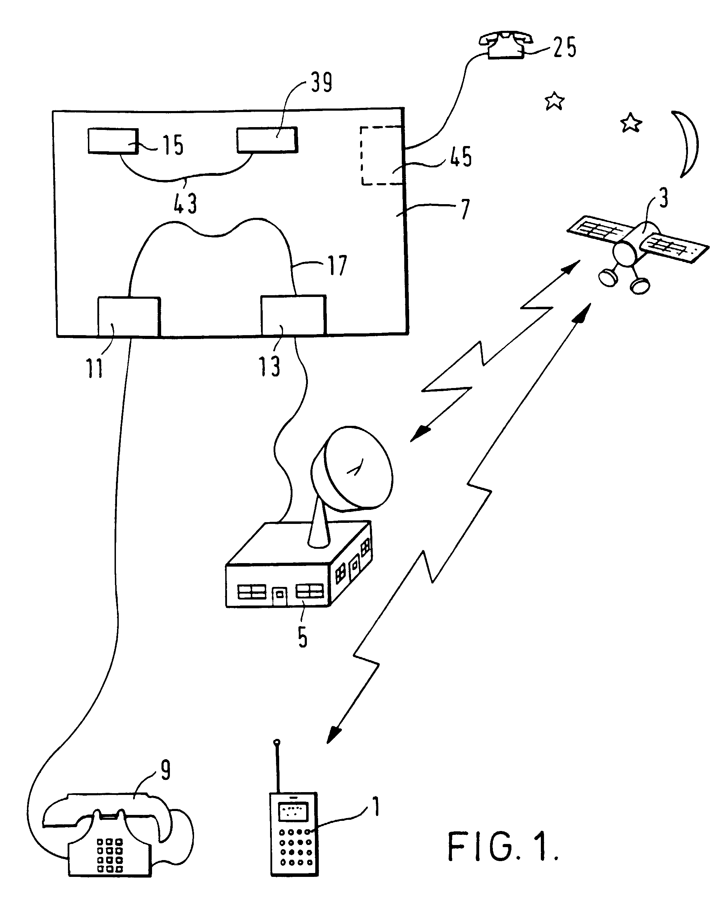

Referring to Figure 1, a mobile terminal in the form of a mobile telephone handset 1 is in two-way radio communication with a satellite 3 which, in turn, is in two-way radio communication with a satellite each station 5. By means of the satellite 3, the earth station 5 can pass messages to and receive message from the mobile telephone handset 1 and the mobile telephone handset 1 can pass messages to and receive messages from the satellite earth station 5. The satellite may form part of a satellite network such as the ICO™ or Iridium system, supra.

A terrestrial telephone system 7, comprising an agglomeration of switching systems, cables, microwave links, fibre-optic links and so on, joined together across the world, is shown here in simple rectangular outline merely to be generally representative thereof. Access to the terrestrial telephone system is gained via gateways. Gateways can include PSTNs, public switch digital networks (PSDN), PLMNs, satellite communications systems, and so on.

In Figure 1, merely for sake of illustration, an ordinary telephone 9 has, as its gateway into the terrestrial system 7 a public switched telephone network 11. Likewise, the satellite each station 5 has access to the terrestrial telephone system 7 via a satellite gateway 13.

Let us say, by way of example, that the ordinary telephone 9 wishes to communicate with the mobile telephone handset 1. The public switched telephone network 11 first locates, within the terrestrial system A HLR 15 which is uniquely dedicated to the particular mobile telephone handset 1 which is being called. The HLR 15 automatically knows that the mobile telephone handset 1 may be reached through the satellite gateway 13. The public switched telephone network 11 then sets up a two-way communication line 17, within the terrestrial telephone system 7, to join the public switched telephone network 11 and the satellite gateway 13. From that point on the call can proceed as normal. When the call terminates, the public switched telephone network 11 discontinues the two-way communication line 17 The HLR 15 also has an associated call diversion centre 39. Thus, if the call from telephone 9 to handset 1 could not be connected, due, for example to the mobile handset 1 being switched off, or for some other reason, the call can be diverted to a voice mail facility or to another telephone number, under the control of the call diversion centre 39, in a manner known in the art. The call diversion options may be controlled by the user of the mobile handset 1 via the satellite 3 and ground station 5 to achieve conventional call diversion functionality.

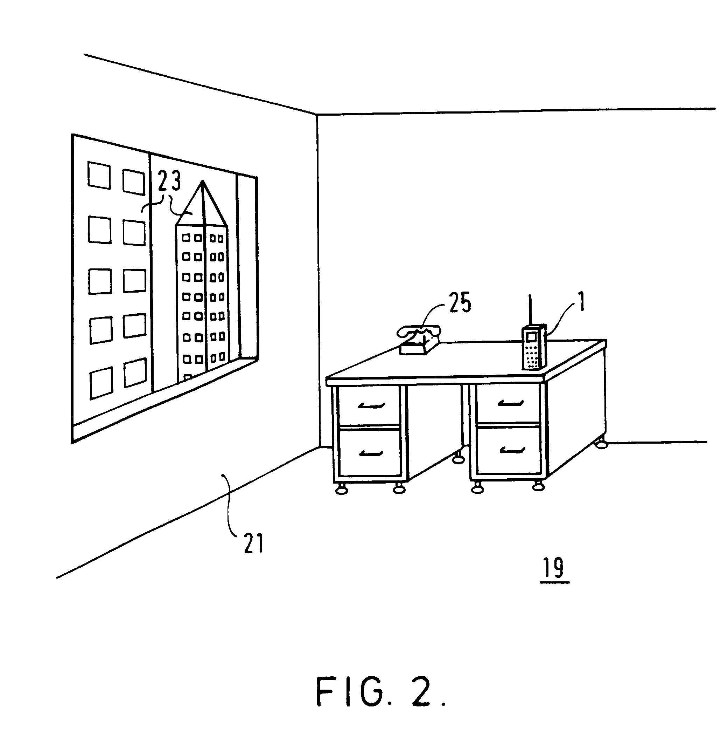

Attention is next drawn to Figure 2, showing a typical situation where the mobile telephone handset 1 may find itself out of contact with the satellite 3.

Pictured is a room in an office building 21 which is surrounded by other tall buildings 23 which obscure line of sight access to the satellite 3 for the mobile telephone handset 1. Because of the other tall buildings 23, and also, perhaps, because of the fabric of the office building 21 itself, the mobile telephone handset 1 cannot gain communications access with the satellite 3 which may either have its signal too heavily shielded no matter where the satellite 3 may be or, may only have access to the mobile telephone handset 1 when it is above a certain elevation.

What is the user of the mobile telephone handset 1 to do? The user wishes to remain in communication, but because of the shielding effect of the building, cannot receive any telephone calls directed to the telephone number of the mobile telephone handset 1.

Fortunately, in this and many similar situations, another alternative telephone 25 is available. The example in Figure 2 is a simple telephone handset 25 attached to a public switched telephone network. Equally, it could be an alternative terrestrial mobile radio telephone working on a cellular system. All that is required is that the alternative telephone 25 is currently capable of communication with its gateway, and is accessible to the user of the mobile telephone handset 1. In accordance with the invention, the handset 1 is configured to generate acoustic DTMF signals which are coupled through the other telephone 25 to address the call diversion centre 39 and route incoming calls for the handset 1, to the telephone 25.

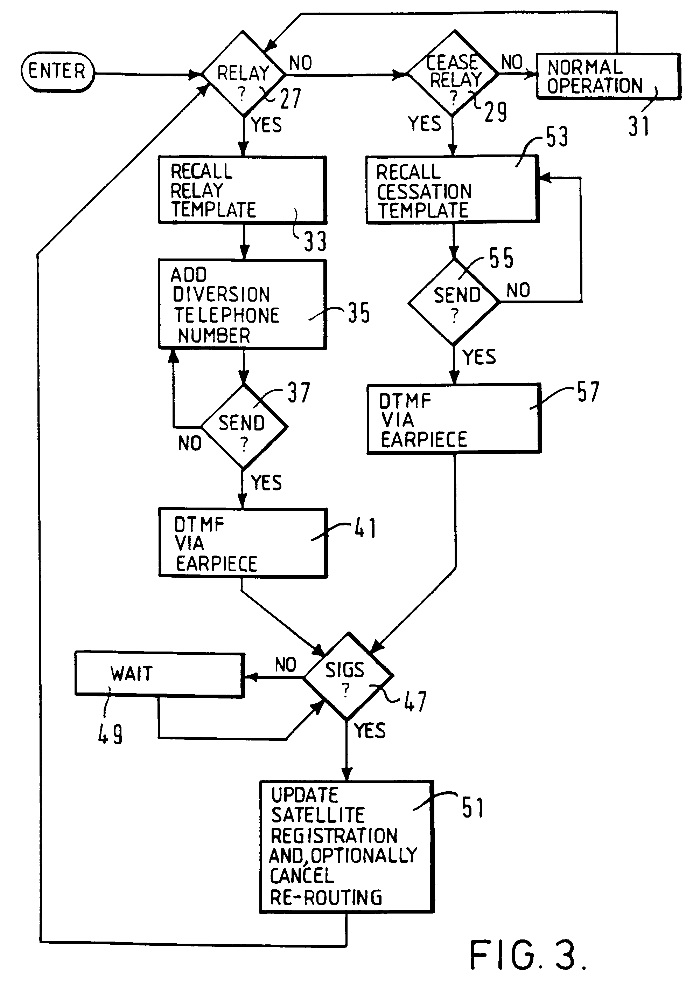

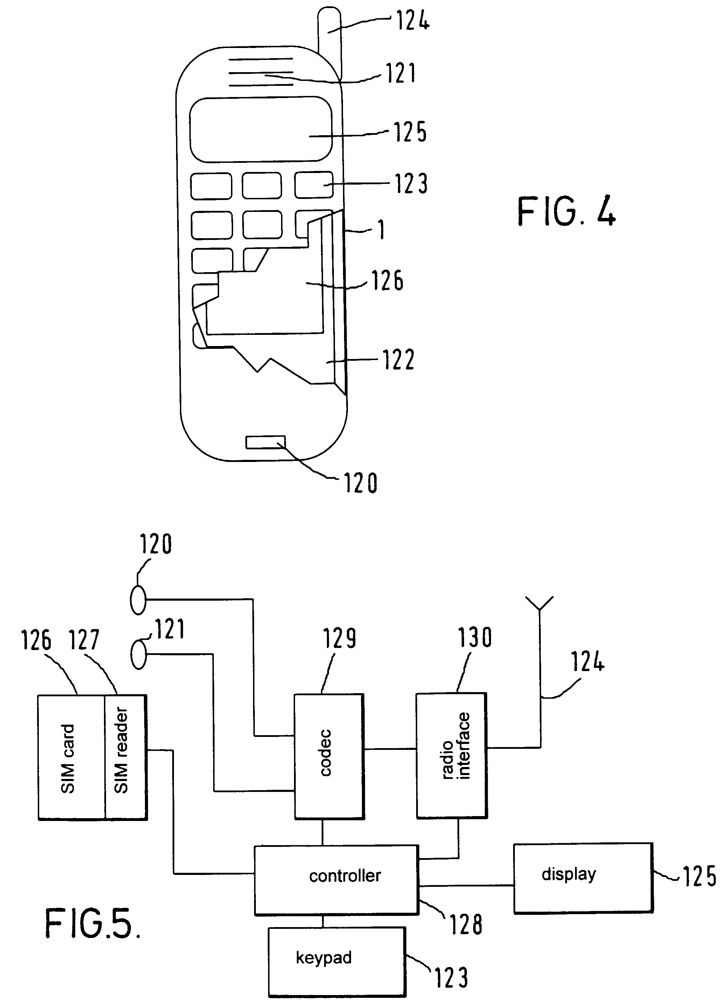

The procedure for carrying out the call diversion will be explained in detail with reference to Figure 3. However, before doing so, the configuration of the handset 1 will be described in detail with reference to Figures 4 and 5.

As shown in Figure 4, the handset 1 comprises a microphone 120, a speaker 121, a battery 122, a keypad 123, an antenna 124 and a display 125. The handheld unit 1 also includes a subscriber identification module (SIM) smartcard 126, which for example, stores an IMSI in a manner well known *per se.* The circuit configuration of the handset 1 is shown in block diagrammatic form in Figure 5. The SIM card 126 is received in an SIM card reader 127 coupled to a controller 128, typically including a microprocessor. The microphone and speaker 120, 121 are coupled to a codec 129, coupled to a conventional radio interface 130 connected to the antenna 124 so as to transmit and receive communication signals, in a manner well known *per se*.

Referring now to the flow chart shown in Figure 3, this shows the operational activity of the handset 1 when call diversion is carried out. The procedures are primarily controlled by the controller 128 as will be evident to those skilled in the art from the description that follows. The controller 128 performs three tests. A first test 27 determines whether or not the handset 1 wishes to divert telephone incoming calls to the handset 25. This can be communicated to the handset 1, by the user pressing keys on the keypad of the handset 123 (see Figures 4 and 5) to insert a special code or codes, indicative of the desire to divert calls.

If the first test 27 determines that no diversion of calls is required, control is passed to a second test 29 where the mobile telephone handset 1 examines the input to its keys 123 to determine whether the user wishes to cease a call diversion operation. If no call diversion requirement is to be met by the mobile telephone handset 1, control passes to a first activity 31 where the mobile telephone handset sustains normal operation, returning control to the first test 27 when the normal operation terminates.

If the first test 27 determines that diversion of telephone calls directed to be mobile telephone handset 1 is required, control passes to a second operation 33 in which the mobile telephone handset 1 recalls, from an internal memory in the controller 128, a template for causing the call diversion centre 39 to divert calls. The template is a sequence of instructions which, when received by a call diversion centre 39 in the terrestrial system 7, activates the call diversion centre 39 to cause the terrestrial system 7 to divert telephone calls, directed to the mobile satellite handset, to a selectable alternative number, namely the alternative telephone 25 of Figure 2 or any other convenient device The template may include data relating to the subscriber for the mobile user terminal 1, to be recognised by the call diversion centre 39 and security data to avoid fraudulent re-routing of calls by third parties.

The user of the mobile telephone handset 1 next uses the keypad 123 on the handset 1 to dial in the telephone number of the alternative telephone 25 and a third operation 35 provides the keyed telephone number data for the alternative telephone 25 as additional data for the recalled template.

A third test 37 monitors the mobile telephone handset 1 to see if the user is ready to send the template and the number of the alternative telephone 25.

In the meantime, the user operates the alternative telephone 25, or any other telephone, to dial the call diversion centre 39, schematically indicated in Figure 1, it being understood that the diversion centre 39 can be on a terrestrial gateway of any kind. Once contact is established with the diversion centre 39, the user of the mobile telephone handset 1 presses appropriate keys on keypad 123 and the third test 37 passes control to the fourth operation 41. In the fourth operation 41, the user of the mobile telephone handset 1 holds the earpiece 121 of the mobile telephone handset 1 to the mouthpiece of the alternative telephone 25. The mobile telephone handset 1 then sends DTMF signals, sequentially representative of the diversion template set up by the second operation 33, together with the diversion telephone number included by the third operation 35, to the diversion centre 39. It will be understood that the controller 128 sends digital data to the codec 129 which in turn sends analog electrical signals to the earpiece 121, such that the earpiece produces a sequence of audio DTMF signals. The audio signals are converted in the mouthpiece of the telephone 25 into electrical signals that are routed to the call diversion centre 39.

In response, the diversion centre 39 establishes a temporary link 43 with the home location register 15 for the mobile telephone handset 1 and sends, for storage against the entry in the home location register 15, an indication that calls are to be diverted and the telephone number of the alternative telephone 25 to which the calls are to be diverted. Thereafter, when an ordinary telephone 9 goes through its public switched telephone network 11 and accesses the home location register 15 for the mobile telephone handset 1. Instead of establishing the two-way communication line 17 to the satellite gateway 13, it directs its call, through the alternative gateway 45, shown in Figure 1 in dotted outline, which allows connection to the alternative telephone 25.

The fourth operation 41 shown in Figure 3 passes control to a fourth test 47 in which the mobile telephone handset 1 listens to see if the satellite 3 has reestablished communication between the mobile telephone handset 1 and the earth station 5. If no signals are heard, the mobile telephone handset 1 goes into a waiting state through a fifth operation 49 in which it continues to listen for signals from the satellite 3. As soon as the fourth test 47 detects that satellite signals have been received, indicating that the mobile telephone handset 1 is once again in communication with the earth station 5, it passes control to a sixth operation 51 in which the mobile telephone handset 1 re-registers with the satellite system via the earth station 5. Optionally, it may also cancel call diversion. If call diversion is to be cancelled, the mobile telephone handset 1 sends a sequence of signals, via the earth station 5 and the satellite gateway 13, whereby the satellite gateway 13 accesses the HLR 15 and cancels the entry for diversion of calls. Thereafter, whenever an ordinary telephone 9 seeks to access the mobile telephone handset 1, the call is routed via the satellite gateway 13.

The cancellation of call diversion is optional because it may be that the user of the mobile telephone handset 1 wishes calls to continue to be diverted, for whatever reason. If the user has pressed the correct key or sequence of keys on the mobile telephone handset 1, call diversion does not occur.

Alternatively, call diversion may be conditional. For example, the mobile telephone handset 1 may be in an environment where the satellite 3 is accessible some of the time but not others. Conditional call diversion occurs as follows. During the fourth operation 41, indication is transmitted to the diversion centre 39 whereby the diversion centre 39 stores, in the home location register 15, an indication that call diversion is conditional. During conditional call diversion, the call, to the mobile telephone handset 1, is first routed through the satellite gateway 13. If a call is successfully established, via the satellite gateway 13, with the mobile telephone handset 1, the call proceeds. If the attempt to reach the mobile telephone handset 1 via the satellite gateway 13 fails, the call is diverted, as given in an example before, to the alternative gateway 45 to reach the alternative telephone 25.

Returning to the second test 29, if the user of the mobile telephone handset 1 has pressed a predetermined key 123 or sequence of keys to indicate that he wishes to cease call diversion, control is passed through a seventh operation 53 where the mobile telephone handset 1 recalls from an internal memory associated with the controller 128, the template for cessation of call diversion activity. The template is merely a sequence of commands, to be received by the diversion centre 39, to end call diversion. A fifth test 55 waits to see if the user is ready to send the template or sequence of commands.

Meanwhile, as earlier stated, the user uses the alternative telephone 25 or any other telephone, to telephone the diversion centre 39. The earpiece 121 of the mobile telephone handset 1 is then held up to the mouthpiece of the alternative telephone 25. A predetermined key or keys 123 are then pressed to indicate that the user is ready to send the template or sequence of commands for cessation of call diversion. In an eighth operation 57 the mobile telephone handset 1 then sends the commands, as a sequence of DTMF signals, to its earpiece 121. These are, in turn, relayed to the diversion centre 39 via the mouthpiece of the alternative telephone 25. In response, the diversion centre 39 sets up a temporary link 43 to the home location register 15 for the mobile telephone handset 1 and cancels the call diversion instructions. Thereafter, whenever an ordinary telephone 9 wishes to contact the mobile telephone 1, the calls are routed from the appropriate public switch telephone network 11 directly to the satellite gateway so that the mobile telephone handset 1 is contacted via the earth station 5 and the satellite 3.

Alternatively, the handset 1, if communication is reestablished with the satellite 3, can use direct access, via the satellite 3 and the satellite gateway 13, to the diversion centre 39 to send the template for cessation of the call diversion activity, sending the necessary sequence of DTMF signals without employing the alternative telephone 25.

## Claims

1. A mobile user terminal for use in a mobile telecommunications network which includes a call diversion centre responsive to a command from another telephone to divert calls for the user terminal, the mobile user terminal being selectively operable to generate acoustic signals to be coupled through the other telephone to control operation of the call diversion centre.

2. A mobile user terminal according to claim 1 selectively operable to produce a sequence of acoustic signals to be coupled through the other telephone to command the call diversion centre to divert calls for the user terminal

3. A mobile user terminal according to claim 1 or 2 selectively operable to produce a sequence of acoustic signals to be coupled through the other telephone to command the call diversion centre to cease diverting calls for the user terminal.

4. A mobile user terminal according to any preceding claim including an earpiece and a control circuit operative to feed electrical signals to the earpiece so as to produce said acoustic signals.

5. A mobile user terminal according to any preceding claim including a telephone keypad, said control circuit being responsive to a predetermined operation of the keypad to produce the acoustic signals

6. A mobile user terminal according to any preceding claim wherein the acoustic signals comprise DTMF signals.

7. A mobile user terminal according to any preceding claim comprising a mobile telephone handset.

8. A mobile telecommunications network including a mobile user terminal according to any preceding claim, and the other telephone for sending commands to a call diversion centre to divert calls for the mobile user terminal.

9. A network according to claim 8 and including the call diversion centre.

10. A network according to claim 9 wherein the call diversion centre is operative to divert the calls to the other telephone.

11. A network according to claim 9 or 10 including a station for providing radio contact with the mobile user terminal.

12. A network according to claim 11 wherein the call diversion centre is operable to monitor the radio contact and to cease diversion of calls for the mobile user terminal when the radio contact is regained after having been lost.

13. A network according to claim 11 or 12 the call diversion centre is operative on each occasion that the mobile user terminal is called, to cause the base station to attempt to place the call with the user terminal and is operative to divert the call only if the base station is unable to make contact with the user terminal.

14. A network according to any one of claims 8 to 13 including ground based elements of a satellite network.

15. A network according to any one of claims 8 to 13 including a terrestrial cellular network.

16. A method of diverting a call from a telecommunications network that includes a call diversion centre, to a mobile user terminal, the method comprising:
calling the diversion centre from another telephone,
using the mobile user terminal to generate acoustic signals, and
feeding the acoustic signals to the other telephone whereby to produce corresponding telecommunication signals to be directed to the diversion centre to cause diversion of calls intended for the mobile user terminal.

17. A method according to claim 16 including loading the telephone number of a telephone to which the calls are to be diverted, into the mobile terminal, whereby the telephone number is included in the signals transmitted to the call diversion centre through the other telephone.

18. A method according to claim 17 wherein the telephone number is the number of the other telephone.

19. A method according to claim 17 or 18 including monitoring radio contact with the mobile user terminal and ceasing the diversion of calls when the radio contact is regained after having been lost.

20. A method according to claim 16, 17, 18 or 19 including making an attempt to place the call with the user terminal and diverting the call only if no contact is made with the mobile user terminal.
